# EUROPEAN PATENT SPECIFICATION

(11) **EP 1 633 954 B1**
(45) Date of publication and mention of the grant of the patent: **10.12.2008**
(21) Application number: 04735603.5
(22) Date of filing: 01.06.2004
(51) Int. Cl.: E21B 43/20

(54) **APPARATUS AND METHOD FOR TREATING INJECTION FLUID**
VORRICHTUNG UND VERFAHREN ZUR BEHANDLUNG EINER INJEKTIONSFLÜSSIGKEIT
APPAREIL ET PROCEDE POUR TRAITER UN FLUIDE D'INJECTION

(30) Priority: 30.05.2003 GB 0312394
(43) Date of publication of application: 15.03.2006
(73) Proprietor: VWS Westgarth Limited, 3 Redwood Crescent East Kilbride Glasgow G74 5PR (GB)
(72) Inventor: YOUNG, Crawford, Glasgow G44 4EX (GB); THERON, Arno, 149 Newlands Road Glasgow G44 4EX (GB); BAILLIE, Brian, Glasgow G44 4EX (GB)
(74) Representative: Shanks, Andrew
(86) International application number: PCT/GB2004/002310
(87) International publication number: WO 2004/106697

(56) References cited:
- WO-A-02/12675
- GB-A- 1 520 877
- US-A- 4 723 603
- US-A- 6 164 379
- US-B1- 6 196 314

## Description

### FIELD OF THE INVENTION

The present invention relates to an apparatus and method for treating an injection fluid, and in particular, but not exclusively, to an apparatus and method for filtering and treating water to be injected into a subterranean hydrocarbon-bearing formation.

### BACKGROUND OF THE INVENTION

Extracting hydrocarbons from a subterranean formation involves flowing hydrocarbons from the formation to surface through a production well bore. In the early stages of production, the hydrocarbons are driven into the production well and flowed to surface by pressure within the formation. However, over time the formation pressure reduces until natural extraction can no longer be sustained, at which stage some form of artificial or assisted extraction is required. One common form of artificial extraction involves the injection of a fluid medium into the depleting formation through an injection well bore which extends from surface in order to displace the hydrocarbons from the formation. Conventionally, the fluid medium is aqueous and may be produced water or sea water or the like. Fluid injection in this manner may also be utilised as a form of matrix support in order to prevent collapse of the reservoir after the hydrocarbons have been removed.

Where water injection is utilised to displace hydrocarbons from the formation, or provide matrix support, it is important that the injection water is compatible with the formation chemistry and is substantially free from suspended or dissolved particles and colloidal and macromolecular matter. This is required to prevent or at least minimise plugging of the formation and associated wells, which occurs when precipitates or suspended particles or the like accumulate and block, or plug, fluid passageways. Such fluid passageways may include pores, fractures, cracks or the like in the hydrocarbon-bearing rock formation, or passageways defined by production and injection well bores. This plugging can significantly reduce hydrocarbon production and in severe cases can terminate production altogether.

In order to ensure that the injection fluid or water is substantially free from suspended or dissolved particles and the like, it is known in the art to treat the water prior to injection into the formation. Treatment normally includes a combination of chemical and mechanical or physical processes. For example, coagulants or flocculants may be added to the water to encourage flocculation where heavy particles or flocculus, known as "floc", are formed. The floc may then be removed by sedimentation and/or by filtration whereby mechanical straining removes a proportion of the particles by trapping them in the filter medium. Conventional filtration apparatus for use in treating injection water to remove such particulate material include multimedia filters which consist of two or more layers of different or graded granular material such as gravel, sand and anthracite, for example. The fluid or water to be treated is passed through the filter and any suspended or dissolved particles or the like will be retained in the interstices between the granules of the different layers. It is therefore required that the filter media be regularly cleaned to maintain a sufficient filtration efficiency. Cleaning is conventionally achieved by a process known as backwashing wherein clean or filtered water is passed through the filter media in a reverse direction in order to dislodge the particles which have been captured by the granules of the filter. It is common to continually collect filtered fluid or water during normal operation of the filtration apparatus, and when backwashing is required, the apparatus is shut off and the collected filtered water is washed or pumped using dedicated pump means in a reverse direction through the filter apparatus. In conventional systems, around 100 to 150 m³ of fluid may be required to be collected and stored prior to cleaning, which utilises a considerable amount of valuable plant space, particularly on off-shore platforms. This backwashing process, while effective, results in the wastage of a large volume of treated water and the loss of a portion of the filter media and also requires energy to operate the pump means.. Furthermore, in order to achieve adequate filtration, a large quantity of filter media must be utilised which results in an extremely large and heavy filtration unit requiring a considerable amount of dedicated plant space which is at a premium on off-shore production platforms, for example. Additionally, such multimedia filters require considerable personnel attention to maintain, clean and replace the filter media.

With regards to plugging caused by precipitate formation and accumulation, this occurs when ionic species in the injection fluid or water combines or reacts with compatible ionic species in water present in the formation producing a precipitate or scale. For example, divalent sulfate anions (SO₄²⁻) in the injection water will combine with various cations which may be present in the formation water to form substantially insoluble precipitates. For example, the formation water may contain, among others: barium cations (Ba²⁺), which when combined with sulfate produces a barium-sulfate or barite precipitate; strontium cations (Sr²⁺) resulting in the formation of a strontium-sulfate precipitate; or calcium cations (Ca²⁺) resulting in the formation of a calcium-sulfate or anhydrite precipitate or scale. As noted above, these resultant precipitates are substantially insoluble, particularly barite, making any precipitate purging and removal/squeezing process extremely difficult, complicated and expensive.

Additionally, the presence of sulfate in the injection fluid or water provides a source of sulfur which thermophilic sulfate reducing bacteria (SRB) present in the formation feed on, producing hydrogen-sulfide (H₂S) which causes souring of the well. Hydrogen-sulfide is extremely corrosive and specialised equipment must be used to accommodate the "sour" hydrocarbons, both at the extraction/production stage and at the processing stage. Using injection water with a high sulfate content can therefore sour an originally "sweet" well.

Various methods have been proposed to provide a preventative solution by removing the problematic, or precursor divalent ions from the injection water before injection into the formation. For example, prior art reference US 4,723,603 assigned to Marathon Oil Company discloses a process in which a feed water is treated to remove precursor ions by a process of reverse osmosis to produce a treated injection water product. The reverse osmosis technique involves forcing the feed water through a semi-permeable reverse osmosis membrane under a pressure greater than the osmotic pressure for the feed conditions and the membrane type. It is known in the art that operational pressures of reverse osmosis plants may be in the range of 50 to 70 barg. Thus, considerable energy may be expended in operating the reverse osmosis process where a significant flow rate of treated injection water is required.

The reverse osmosis process is effective in removing ionic species dissolved in an aqueous solution, but the efficiency and performance of the process can depend heavily on the quality of the feed water to be treated. For example, feed water which contains large quantities of suspended solids or colloidal matter will cause fouling of the reverse osmosis membrane, thus reducing the overall efficiency of the ionic species removal process. It is therefore common to pre-treat the feed water using conventional multimedia filters as discussed above.

It is among objects of embodiments of the present invention to obviate or at least mitigate problems associated with prior art methods of treating a fluid for injection into a hydrocarbon bearing formation.

### SUMMARY OF THE INVENTION

According to a first aspect of the present invention, there is provided an apparatus for treating a fluid to be injected into a subterranean hydrocarbon-bearing formation, said apparatus comprising:
a filtration unit having a fluid inlet and a first fluid outlet, said fluid inlet and first fluid outlet being in fluid communication via a fluid passage;
at least one filtration membrane located within said fluid passage such that the fluid inlet and first fluid outlet are in fluid communication through the at least one filtration membrane, wherein said at least one membrane includes at least one of an ultra-filtration membrane and a micro-filtration membrane; and
an ionic species removal plant coupled to the first fluid outlet and being in fluid communication therewith.

Thus, a fluid to be injected into a subterranean hydrocarbon-bearing formation may be flowed through the filtration unit and through the at least one filtration membrane such that any colloids, flocculants, particulates and high molecular mass soluble species and the like will be retained by the membrane by a mechanism of size exclusion to concentrate, fraction or filter dissolved or suspended species within the fluid. This filtered fluid is then be flowed to the ionic species removal plant to be further treated. Thus, by locating the ionic species removal plant downstream of the filtration unit of the apparatus of the present invention, fouling of the ionic species removal plant by particles and colloids and the like is substantially reduced. This arrangement improves the performance of the ionic species removal plant and also reduces the amount of cleaning required which conventionally involves the use of potent chemicals which require safe disposal when spent.

When compared with traditional filtering methods used for treating injection fluid, the apparatus of the present invention requires much reduced plant space in that the filtration unit comprising either ultra-filtration or micro-filtration membranes has a considerably smaller footprint than multimedia filter units. For example, a filtration unit of the apparatus of the present invention may define a footprint of 15 to 16 m² whereas conventional multimedia filtration units for a similar flux range may define a footprint of around 49 to 50 m². Furthermore, the quality of filtered fluid using the filtration unit of the apparatus of the present invention would be considerably better than that produced by multimedia filtration, in that a larger range of particulate matter will be removed from the fluid being treated. For example, the filtration unit of the present invention may be capable of filtering particulate material as small as 0.005 to 0.1 microns, which additionally may eliminate the requirement to introduce coagulants or flocculants into the fluid prior to filtration. On the other hand, conventional multimedia filtration units may fail to capture particles such as silt having a nominal diameter of around 0.45 microns. Accordingly, the quality of the fluid being fed to the ionic species removal plant will be considerably better than that which would be provided by conventional multimedia filtration units. Following from this, fouling of the ionic species removal plant will be reduced providing a corresponding reduction in the frequency of required plant cleaning, cleaning cost and downtime, while extending plant operational life. Moreover, the filtration unit of the present invention may be easily adapted to be used in an automated treatment system, which multimedia filters are generally not suitable for due to frequently required personnel interaction. Numerous additional benefits of the present invention in view of prior art or conventional systems exist, some of which are considered below.

Preferably, the ionic species removal plant is a selective ionic species removal plant such that only selected or required ions are removed from a fluid requiring to be treated. Preferably, the ionic species removal plant is a sulfate removal plant. Preferably, the ionic species removal plant comprises at least one and preferably a plurality of nano-filtration membranes adapted to reject divalent sulfate anions (SO₄²⁻) while allowing monovalent ions to pass therethrough. The nano-filtration membranes may permit ions such as sodium ions, chlorine ions and potassium ions, for example, to pass therethrough, wherein such monovalent ions may have a beneficial effect on the formation by stabilising clays and the like. Accordingly, the ionic species removal plant preferably does not utilise reverse osmosis. Advantageously, the nano-filtration membranes also assist to remove particles having nominal diameters of as low as 0.1 nanometres.

Preferably, the ionic species removal plant is pressure driven such that fluid to be treated is driven under pressure therethrough. In a preferred embodiment, the fluid is driven by a positive pressure differential. Alternatively, the fluid may be driven by a negative pressure differential by drawing a vacuum across the ionic species removal plant. The pressure differential may be provided by pump means, located either upstream or downstream of the ionic species removal plant, depending on whether a positive or negative pressure differential is required.

Advantageously, a pressure differential less than the plant osmotic pressure for the feed conditions and membrane type within the ionic species plant is utilised. For example, a pressure differential of between 5 to 40 bar may be utilised to drive the fluid to be treated through the ionic species removal plant. Accordingly, achieving ionic species removal at pressures lower than that required for reverse osmosis results in a more energy efficient treatment process.

Advantageously, the fluid inlet of the filtration unit is adapted to be coupled to a fluid source for fluid communication therewith. The fluid source may be seawater, for example, or water or brine produced from a subterranean formation or the like.

The fluid inlet of the filtration unit of the apparatus may be adapted to be coupled to the fluid source via a pre-filtration unit. Preferably, the pre-filtration unit comprises strainers having sieve sizes of between 80 to 150 microns. Thus, the fluid intended to be fed to the apparatus of the present invention may be pre-filtered in order to remove larger suspended particles and the like which may block or foul the at least one membrane located within the filtration unit.

Advantageously, the at least one filtration membrane defines a plurality of pores each having a nominal diameter or equivalent dimension of between 0.005 to 0.1 microns for ultra-filtration membranes and 0.05 to 2 microns for micro-filtration membranes. Preferably, the molecular weight cut-off of an ultra-filtration membrane for use in the filtration unit is between 1,000 and 500,000.

In one embodiment of the present invention, the at least one membrane may comprise a ceramic material. Alternatively, the at least one membrane may comprise a polymeric material. For example, a crystalline polymeric material may be utilised where micro-filtration membranes are required. Additionally, amorphous polymers may be utilised where ultra-filtration membranes are required. Suitable polymeric membrane materials include PVDF, polypropylene, polysulfone, cellulosic and other proprietary formulations.

Preferably, the filtration unit comprises a pressure vessel.

Preferably, the apparatus includes a plurality of membranes arranged within the filtration unit. The membranes may consist entirely of ultra-filtration membranes, or entirely of micro-filtration membranes, or a combination thereof. Advantageously, the number of membranes required for the filtration unit may be selected in accordance with the available size of the filtration unit and the required filtration surface area to achieve the desired fluid fluxes. For example, the filtration unit may comprise between 60 and 80 membranes.

In one embodiment of the present invention, the membrane utilised in the filtration unit is of a tube configuration which consists of a porous support tube having a membrane material cast on an inside wall thereof. In this embodiment, fluid to be treated may be caused to pass radially outwardly through the membrane material. Alternatively, fluid may be caused to pass radially inwardly through the membrane material.

In an alternative embodiment of the present invention, the membrane utilised in the filtration unit may be of a plate and frame configuration. In this configuration, a flat sheet membrane is secured in a plate and frame unit to form a membrane screen. This arrangement is particularly advantageous in that virtually any membrane may be cut to the appropriate shape and secured or installed in the unit.

In a further alternative embodiment, the membrane may be provided in a spiral wound configuration. In this embodiment, conventionally, a membrane laminate is provided which consists of two substantially flat membrane sheets or layers, separated by a filtrate carrier. Three sides of the laminate are sealed to envelop the filtrate carrier within the membrane sheets, with a fourth side of the laminate being secured, longitudinally, to a perforated tube. The laminate is then rolled around the perforated tube, with the outwardly facing surfaces of the membrane sheets being separated by a screen or corrugated spacer, to produce a substantially cylindrical cassette. In this arrangement, fluid to be treated is flowed into the perforated tube and is caused to pass radially outwardly through the spirally wound membranes of the cylindrical cassette. Alternatively, fluid to be treated may be passed radially inwardly through the spirally wound membranes.

In a preferred embodiment of the present invention, the membrane may be provided in a hollow fibre configuration. In this embodiment, a plurality of membranes are preferably provided. This hollow fibre configuration comprises a plurality of elongate hollow or tubular fibres of a suitable membrane material, longitudinally aligned within the filtration unit. The hollow fibres are similar in form to the tube configuration membranes, with the exception that no porous support tube is required. In this preferred embodiment, fluid to be treated is flowed along the inside of the membranes and is caused to pass radially outwardly through the membrane material, generally referred to as an "in-to-out" configuration. Alternatively, the fluid to be treated may be flowed along the outer surface of the membranes and caused to pass radially inwardly through the membrane material, generally referred to as an "out-to-in" configuration.

Depending on the service mode of the filtration membrane, as discussed below, the filtration unit may comprise a second fluid outlet to provide an exit for unfiltered fluid or fluid used in a backwashing cleaning operation. It should be appreciated that any unfiltered fluid will likely have a higher concentration of particulates, colloids and suspended matter and the like than the feed fluid, as the solid matter retained by the at least one membrane will be entrained into the stream of fluid and directed and flowed towards the second fluid outlet. Thus, the feed fluid entering the filtration unit via the fluid inlet will be separated into two fluid streams, the first being filtered fluid driven through the at least one membrane and exiting through the first fluid outlet, and the second being unfiltered or concentrated fluid exiting through the second fluid outlet. The provision of the second fluid outlet and thus second flow path assists in cleaning the at least one filtration membrane, reducing the amount of backwashing required and maintaining a reasonably high filtration efficiency.

Advantageously, the filtration unit of the present invention may operate in either a dead-end flow service mode or a cross-flow service mode. In dead-end flow mode of operation (also known as direct flow) fluid is forced perpendicularly, directly through the at least one membrane. Accordingly, there is only a feed flow entering the filtration unit via the fluid inlet, and a filtrate flow exiting the filtration unit via the first fluid outlet. The dead-end flow approach typically allows for optimal recovery of feed water in the 95 to 98% range, but is typically limited to feed streams of low suspended solids (typically < 10 NTU turbidity). With dead-end flow a depth of particle build up is formed on the surface of the at least one membrane.

In cross-flow mode, fluid passes parallel to the at least one filtration membrane, often at a velocity an order of magnitude higher than the velocity of the fluid stream passing through the membrane. With this operation, three flow paths are established, the first being feed fluid entering the filtration unit via the fluid inlet, the second being filtered fluid exiting the filtration unit via the first fluid exit, and the third being unfiltered or concentrated fluid exiting the filtration unit via the second fluid outlet. The flow of unfiltered fluid through the second fluid outlet assist in cleaning the at least one membrane by constantly removing filtered material which would otherwise accumulate on the surface thereof. Accordingly, the cross-flow mode is typically used for feed fluids with higher suspended solids (typically 10 to 100 NTU turbidity). The cross-flow mode of operation typically results in 90 to 95% recovery of feed fluid. This is a significant improvement over conventional multimedia filtration units which may provide a fluid recovery in the region of 80%.

Preferably, the apparatus of the present invention comprises a plurality of filtration units. Advantageously, the filtration units are arranged in parallel. That is, the fluid inlet of each filtration unit may be coupled to a single fluid feed inlet stream, and the first fluid outlet of each filtration unit may be coupled to single first fluid feed outlet stream. Additionally, where provided, the second fluid outlet of each filtration unit may be coupled to a single second fluid outlet stream. Advantageously, each filtration unit may be adapted to be individually isolated in order to permit selective cleaning, replacement or repair or the like without requiring complete shutdown of the apparatus. In an alternative embodiment, the filtration units may be arranged in series such that filtration is achieved in a staged process.

In one embodiment of the present invention, eight pairs of filtration units may be provided.

Preferably, means are provided for creating a pressure differential between the fluid inlet and the first fluid outlet of the filtration unit such that fluid to be treated is pressure driven through the at least one filtration membrane. Advantageously, the pressure differential may be provided by pump means, located either upstream or downstream of the filtration unit, depending on the required pressure gradient. In one embodiment, the fluid may be driven by a positive pressure differential. This positive pressure differential may be achieved using a pump means located upstream of the filtration unit. Advantageously, the filtration unit and associated at least one membrane may be adapted to operate at a positive pressure differential of at least 2 barg, with an upper pressure limit being restricted by, for example, the design limitation of the specific type of membrane being utilised.

Alternatively, the fluid may be driven by a negative pressure differential by drawing a vacuum across the filtration unit. This negative pressure differential may be achieved utilising a pump means located downstream of the filtration unit. Advantageously, the filtration unit and associated at least one membrane may be adapted to operate at a negative pressure differential of, for example, between 0.07 and 0.55 barg. In this embodiment, the at least one membrane may be submerged within a tank or vessel at atmospheric pressure, with the negative pressure differential across the at least one membrane providing a driving force to drive the fluid from the tank or vessel through the membrane.

Preferably, where a plurality of filtration units are provided, a single pump means may be provided to create a pressure differential across the membranes. Alternatively, individual pump means may be provided.

Preferably, the apparatus of the present invention further comprises a cleaning system for use in cleaning at least the at least one membrane of the filtration unit. The cleaning system is preferably adapted to operate while the at least one membrane remains located within the filtration unit, which is conventionally referred to as "cleaning-in-place". Advantageously, the cleaning system utilises a portion of fluid from the fluid outlet of the filtration unit. Preferably, the cleaning system is particularly adapted for use where a plurality of filtration units are provided. In this embodiment, a filtration unit requiring to be cleaned may be isolated from the remaining units such that fluid to be filtered cannot pass therethrough. Accordingly, once isolated, the filtration unit may be backwashed by forcing fluid taken from the fluid outlet of the operational filtration units in a reverse direction through the at least one membrane located therein. The filtration units may be selectively isolated by isolating means such as valves or the like.

Advantageously, the filtration units are adapted to accommodate the overall required filtration flux or fluid rate when one or more of the filtration units are isolated. Accordingly, fluid taken from the fluid outlet of the operational filtration units is preferably fed directly to the isolated unit to be cleaned. Thus, the requirement to continually collect fluid in a separate storage tank to subsequently be used for cleaning is eliminated, as is the requirement to shut down the entire filtration unit to accommodate cleaning. That is, the operational filtration units will be capable of producing sufficient filtered fluid for a portion to be piped or fed directly into the cleaning system and used to backwash an isolated filtration unit without requiring additional pump means. However, embodiments of the invention may comprise additional or supplementary pump means.

In one embodiment, fluid for use in cleaning may be taken directly from the first fluid outlet of the filtration unit or units such that fluid used for cleaning has not been treated by the ionic species removal plant. Alternatively, fluid for use in the cleaning system may be taken from an outlet of the ionic species removal plant. Accordingly, in both embodiments, the fluid used in the cleaning system is at least subjected to filtration by the filtration unit.

Advantageously, the fluid utilised in the cleaning system may be used in a cleaning process to clean the ionic species removal plant.

Preferably, the cleaning system further comprises a chemical cleaning system. Conveniently, the chemical cleaning system, in use, requires a chemical solution to be driven across the filtration unit and/or the ionic species removal plant in a normal flow direction. Advantageously, the chemical solution may comprise fluid extracted from the first fluid outlet of the filtration unit, or alternatively may comprise fluid extracted from an outlet of the ionic species removal plant, with the required chemical or chemicals added thereto. Preferably, the chemical cleaning system comprises a pump means to drive the chemical solution across one or both the filtration unit and ionic species removal plant.

Advantageously, the chemical cleaning system may be utilised, for example, once every month during normal operation to clean the filtration unit, whereas the chemical cleaning system may be utilised once every two to three month during normal operation, for example, to clean the ionic species removal plant. It should be noted that chemical cleaning of the ionic species removal plant is required less frequently than the filtration unit due to the fact that the filtration unit of the present invention supplies high quality feed water to the ionic species removal plant.

Preferably, the cleaning system further comprises air cleaning means wherein compressed air is driven through one or both the filtration unit and ionic species removal plant.

Advantageously, the apparatus further comprises a deaerator in order to remove oxygen and other gasses from the fluid in order to prevent aerobic bacteria growth during an injection process. In one embodiment, the deaerator may be located downstream of the ionic species removal plant. Alternatively, the deaerator may be located upstream of the filtration unit or alternatively further may be located between the filtration unit and the ionic species removal plant.

Preferably, the filtration unit of the apparatus operates with a nominal flux of litres of treated product fluid per meter square of filtration membrane per hour of at least 20 1/m²/h. More preferably, the filtration unit operates with a nominal flux of between 80 to 200 1/m²/h.

Preferably also, the operating pH of the fluid may be adjusted within the range 1 to 13. More preferably, the operating pH range is 6.5 to 8.5 depending on the membrane material used.

According to a second aspect of the present invention, there is provided a method of treating fluid to be injected into a subterranean hydrocarbon-bearing formation, said method comprising the steps of:
flowing injection fluid through a filtration unit comprising at least one filtration membrane being at least one of an ultra-filtration membrane and a micro-filtration membrane; and then
driving said injection fluid through an ionic species removal plant.

Preferably, the ionic species removal plant is a sulfate removal plant for removing divalent sulfate ions from the injection fluid. Preferably also, the ionic species removal plant comprises at least one nano-filtration membrane.

Advantageously, the method further involves the step of flowing the injection fluid through a pre-filtration unit prior to flowing the fluid through the filtration unit.

Beneficially, the method may further include the step of flowing the fluid through a deaerator.

According to a third aspect of the present invention, there is provided an injection system for injecting fluid into a subterranean hydrocarbon-bearing formation, said system comprising:
a filtration unit comprising at least one filtration membrane being at least one of an ultra-filtration membrane and a micro-filtration membrane;
an ionic species removal plant coupled to an outlet of the filtration unit; and
injection pump means coupled to the ionic species removal plant and adapted for pressurising fluid from the ionic species removal plant to be injected into a hydrocarbon-bearing formation.

Preferably, the ionic species removal plant is a sulfate removal plant.

According to a fourth aspect of the present invention, there is provided a cleaning system for use in a fluid treatment apparatus incorporating a plurality of filtration units each comprising at least one filtration membrane being at least one of an ultra-filtration membrane and a micro-filtration membrane, and an ionic species removal plant coupled to and located downstream of the filtration unit, wherein the cleaning system comprises:
a cleaning fluid supply taken from the fluid treatment apparatus at a location downstream of the filtration unit; and
means for diverting at least a portion of the cleaning fluid supply directly from the fluid treatment apparatus through the at least one filtration membrane.

Preferably, the cleaning fluid is diverted in a reverse direction through the at least one filtration membrane to effect backwashing thereof.

Preferably, the diverting means is a pipe network communicating fluid from a location downstream of the filtration unit to the at least one filtration unit.

Preferably also, the cleaning fluid is driven through the at least one membrane by pump means associated with the fluid treatment apparatus. Accordingly, the cleaning system preferably does not comprise separate pump means.

In one embodiment of the present invention, the cleaning fluid supply may be taken from the fluid treatment apparatus at a location upstream of the ionic species removal plant. Alternatively, the cleaning fluid supply may be taken at a location downstream of the ionic species removal plant. In either of the alternative embodiments, the cleaning fluid is at least filtered fluid treated by the filtration unit.

Preferably, the cleaning system further comprises fluid isolation means for selectively preventing cleaning fluid taken from the fluid treatment apparatus being passed through the at least one membrane. The isolation means may be valve means such as a manually operated or motorised valve.

Advantageously, the fluid treatment apparatus comprises a plurality of filtration units, and the cleaning system comprises filtration unit isolation means to selectively isolate a filtration unit requiring to be cleaned using the cleaning fluid supply.

Preferably, the cleaning system comprises means for diverting at least apportion of the cleaning fluid supply directly from the fluid treatment apparatus through the ionic species removal plant. Preferably also, the cleaning fluid is directed through the ionic species removal plant in a reverse direction to effect backwashing thereof.

According to a fifth aspect of the present invention, there is provided a method of cleaning a fluid treatment apparatus incorporating a plurality of filtration units each comprising at least one filtration membrane being at least one of an ultra-filtration membrane and a micro-filtration membrane, and an ionic species removal plant coupled to and located downstream of the filtration unit, said method comprising the steps of:
providing a cleaning fluid supply taken from the fluid treatment apparatus at a location downstream of the filtration unit; and
directly diverting at least a portion of the cleaning fluid supply from the fluid treatment apparatus through the at least one filtration membrane.

Preferably, the cleaning fluid is directly diverted through the at least one filtration membrane in a reverse direction to effect backwashing thereof.

Preferably, the method further comprises the step of directly diverting at least a portion of the cleaning fluid through the ionic species removal plant, preferably in a reverse direction to effect backwashing.

### BRIEF DESCRIPTION OF THE DRAWINGS

These and other aspects of the present invention will now be described, by way of example only, with reference to the accompanying drawings, in which:
Figures 1 and 2 are diagrammatic representations of alternative embodiments of an apparatus for treating water to be injected into a hydrocarbon-bearing formation according to the present invention;
Figure 3 is a diagrammatic representation of a sulfate removal process using a nano-filtration membrane;
Figure 4 is a diagrammatic representation of apparatus for treating water to be injected into a hydrocarbon-bearing formation in accordance with an alternative embodiment of the present invention;
Figure 5 is a perspective view of a portion of an apparatus for treating injection water in accordance with an embodiment of the present invention;
Figure 6 is a diagrammatic representation of a backwashing system for use in an apparatus for treating an injection water in accordance with an embodiment of the present invention; and
Figure 7 is a diagrammatic representation of a chemical cleaning system for use in an apparatus for treating an injection water in accordance with an embodiment of the present invention.

### DETAILED DESCRIPTION OF THE DRAWINGS

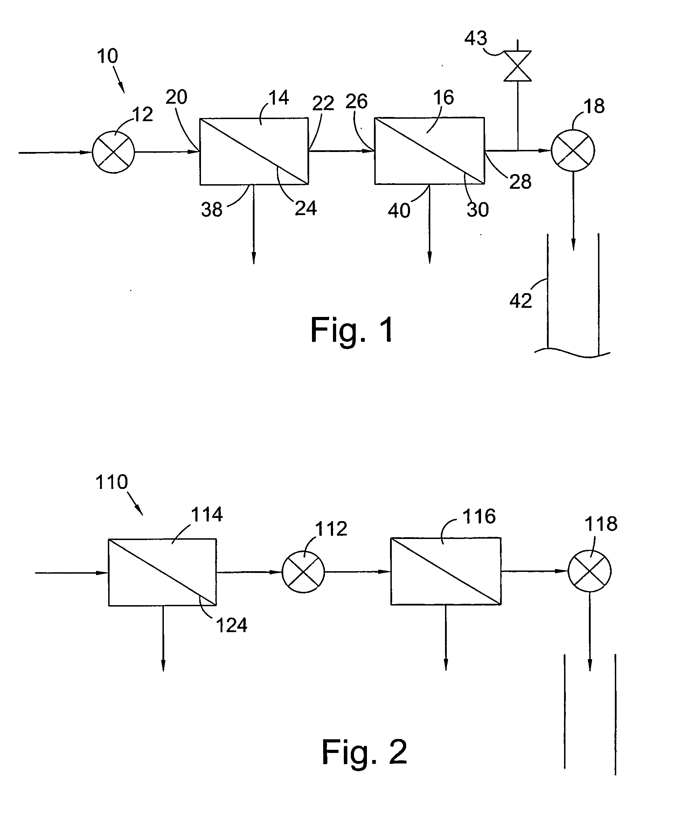

Referring initially to Figure 1, there is shown a diagrammatic representation of a water treatment apparatus or system 10 in accordance with an embodiment of the present invention. The system includes a drive pump 12, a filtration unit 14, a sulfate removal plant 16 and an injection pump 18. The filtration unit 14 includes a fluid inlet 20 and a first fluid outlet 22, between which fluid inlet 20 and first fluid outlet 22 is located a bank of filtration membranes 24. In the embodiment shown, the bank of membranes 24 is composed of ultra-filtration membranes which define pores having nominal diameters or equivalent dimensions of between 0.005 to 0.1 microns with a molecular cut-off weight of between, for example, 1,000 to 500,000. In an alternative embodiment, the bank of membranes may be composed of micro-filtration membranes which define pores having nominal diameters or equivalent dimensions of between 0.05 to 2 microns.

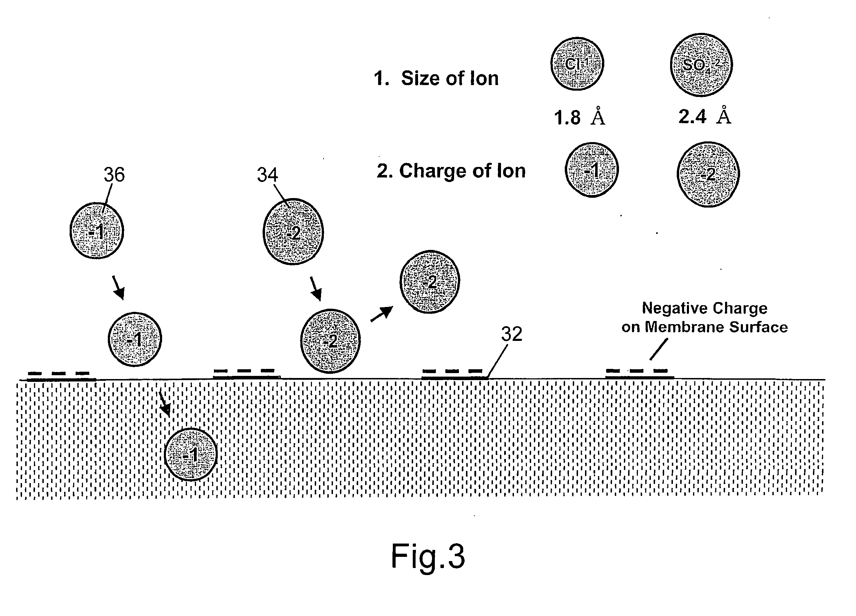

The sulfate removal plant 16 includes a fluid inlet 26 and a first fluid outlet 28 and a bank of nano-filtration membranes 30 located therebetween. As shown in Figure 3, which is a diagrammatic representation of a surface 32 of a nano-filtration membrane of the bank of membranes 30, divalent sulfate anions (SO₄²⁻) 34 are rejected at the surface 32 of the nano-filtration membrane, partly due to size exclusion and partly due to repulsion caused by a negative charge on the surface 32 of the membrane. As shown, however, the membrane allows the passage of monovalent anions such as chlorine anions (Cl⁻) therethrough. The passage of such ions is preferred as they may assist to stabilise formation clays and the like once injected with the water into the formation.

In use, feed water such as sea water from a fluid source (not shown) is pressurised by the drive pump 12 to the required pressure determined by, among other things, membrane type and the filtrate backpressure required. The pressure may be, for example, selected to be between 2 and 5 barg, and possibly greater. In the embodiment shown in Figure 1, therefore, the fluid is driven across the filtration unit 14 by a positive pressure differential. The fluid is pressure driven into the inlet 20 of the filtration unit 14 and is forced through the bank of membranes 24 such that any colloids, flocculants, particulates and high molecular mass soluble species and the like will be retained by the membranes 24 by a mechanism of size exclusion to concentrate, fraction or filter dissolved or suspended species within the water. As shown, the filtration unit 14 includes a second fluid outlet 38 through which unfiltered water may exit carrying the particles and colloids and the like retained by the bank of membranes. This operation mode is termed cross-flow mode and assists to wash or continually clean the membranes 24 to minimise fouling.

Upon exiting the filtration unit 24 through the first fluid outlet 22, the filtered water passes through the sulfate removal plant wherein the membranes 30 reject sulfate anions, as shown in Figure 3. The sulfate removal plant 16 includes a second fluid outlet 40 through which high sulfate concentrated water is rejected from the apparatus 10. Although not shown, the sulfate removal plant may be associated with a separate drive pump to pressurise the fluid from the filtration unit to the required pressure for sulfate removal. In this regard, the fluid passing through the sulfate removal plant 16 is of a pressure which is below the osmotic pressure for the feed conditions and membrane 30 type. Accordingly, the sulfate removal plant 16 does not operate by reverse osmosis.

Water from the first fluid outlet of the sulfate removal plant 16 is then pressurised by the injection pump 18 and is injected into a depleting hydrocarbon-bearing formation via a cased injection well bore 42.

An air release valve 43 is provided at a location downstream of the sulfate removal plant 16 and filtration unit 24, wherein the air valve 43 may be opened when the apparatus is initially put into operation to allow air to be displaced or bled from the system. Additionally, the air valve 43 may be utilised to allow air used in an air cleaning process to be vented from the apparatus 10.

An alternative embodiment to that shown in Figure 1 is shown in Figure 2, in which like components share like reference numerals, incremented by 100. As shown, the apparatus 110 includes a drive pump 112, a filtration unit 114 including a bank of ultra-filtration membranes 124, a sulfate removal plant 116, and an injection pump 118. However, in this embodiment, the drive pump is located downstream of the filtration unit 114 such that water from a water source (not shown) may be driven through the filtration unit 114 by a negative pressure differential. For example, a vacuum pressure of between 0.07 and 0.55 barg may be drawn across the bank of membranes 124.

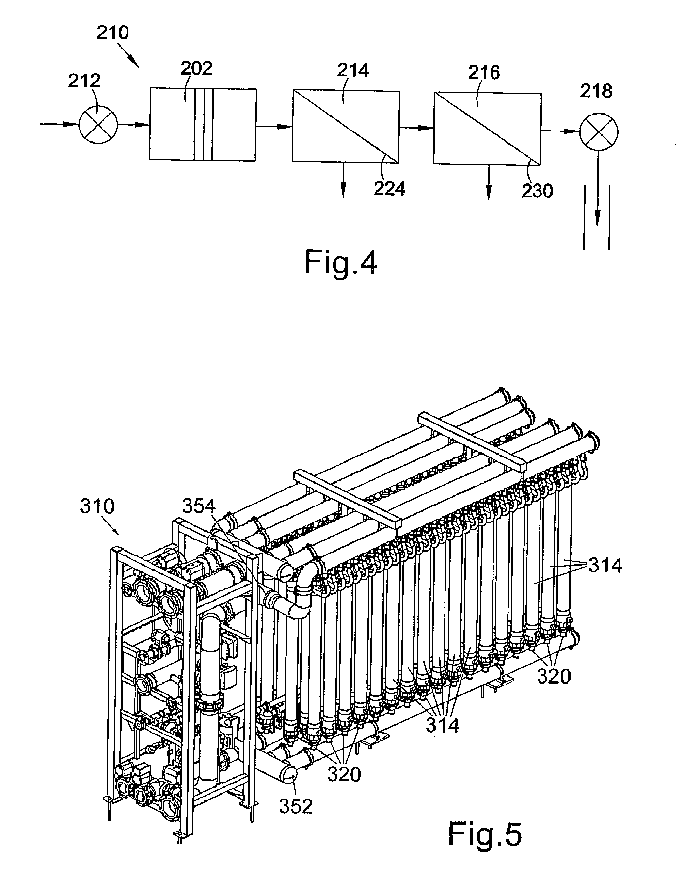

A further alternative embodiment to that shown in Figure 1 is shown in Figure 4, in which like components share like reference numerals, incremented by 200. The apparatus 210 of Figure 4 comprises a filtration unit 214 having a bank of membranes 224, a sulfate removal plant 216 including a bank of sulfate removing nano-filtration membranes 230, and an injection pump 218. The apparatus 210 additionally includes a pre-filtration unit 202 located upstream of the filtration unit 214, and which comprises strainers having sieve sizes of between 80 to 150 microns. Thus, the water intended to be fed to the filtration unit 214 is pre-filtered in order to remove larger suspended particles which may block or foul the bank of membranes 224 located within the filtration unit 114.

Reference is now made to Figure 5 in which there is shown a portion of another alternative embodiment of the apparatus 10 of Figure 1. Accordingly, like components share like reference numerals, incremented by 300. The fluid treatment apparatus 310 of Figure 5 comprises a plurality of filtration units 314 arranged in a rack, generally represented by reference numeral 350. Each filtration unit 314 includes a fluid inlet 320 and a first fluid outlet 322. Additionally, each filtration unit encloses a bank of filtration membranes (not shown), which in the embodiment shown are of a hollow fibre form. The portion of the apparatus 310 shown in Figure 5 further includes a fluid inlet stream or manifold 352 to which the fluid inlet 320 of each filtration unit 314 is connected, and a fluid outlet stream or manifold 354 to which the first fluid outlet 322 of each filtration unit 314 is connected. In this way, the filtration units are considered to be connected in parallel, such that one or more individual units 314 may be independently isolated with a valve (not shown), without shutting off the entire apparatus 310. This arrangement therefore permits individual units to be cleaned, for example by backwashing as discussed below, while the apparatus 310 remains operational.

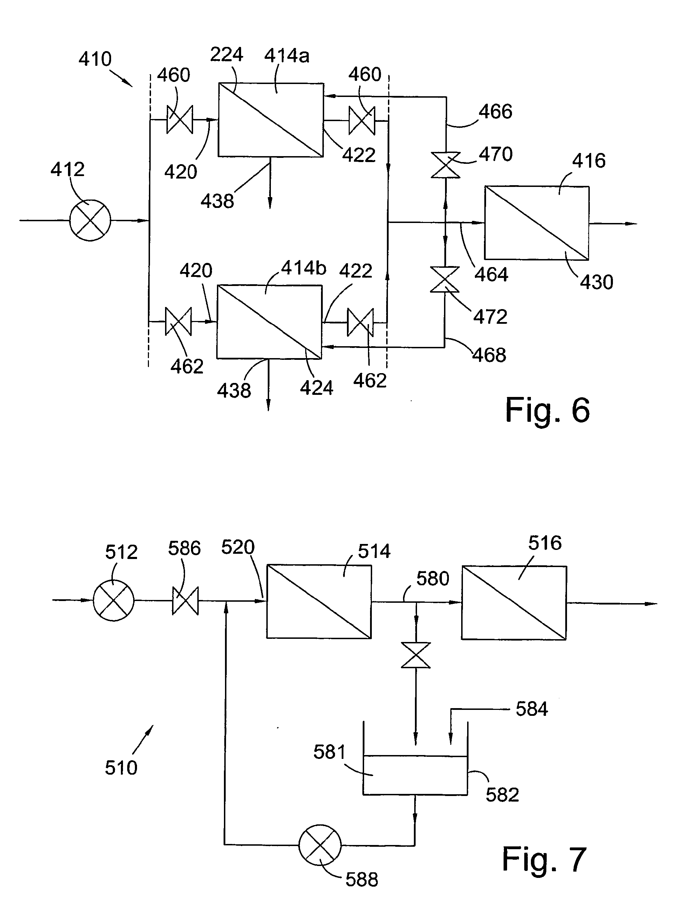

Reference is now made to Figure 6 in which there is shown a diagrammatic representation of an injection water treatment apparatus 410 incorporating a backwashing system in accordance with an embodiment of the present invention. The apparatus of Figure 6 is similar to that shown in Figure 1 and as such like components share like reference numerals, incremented by 400. The apparatus 410 comprises a drive pump 412, a plurality of filtration units 414a,414b (only two shown) connected in parallel, and a sulfate removal plant 416. Each filtration unit 414a,414b includes a bank of membranes 424, and the sulfate removal plant 416 includes a bank of nano-filtration membranes 430. Each filtration unit comprises isolation valves 460,462 which permit a respective unit 414a,414b to be independently isolated.

In use, fluid is pressurised by the pump 412 and is fed to a fluid inlet 420 of each operational filtration unit 414a,414b, wherein the fluid is forced through the membranes 424 and then exits through respective first fluid outlets 422. Each filtration unit 414a,414b includes a second fluid outlet 438 through which unfiltered or cross-flow fluid exits the respective units 414a,414b. The filtered fluid is then driven along a fluid conduit 464 towards the sulfate removal plant 416.

The backwashing system of the apparatus 410 comprises a fluid path 466 extending between the fluid conduit 464 and one filtration unit 414a, and another fluid path 468 extending between the fluid conduit 464 and another filtration unit 414b. It should be noted that a fluid path extending from the fluid conduit 464 to each filtration unit is provided. As shown, fluid path 466 incorporates a valve 470, and fluid path 468 incorporates a valve 472.

Assuming backwashing of filtration unit 414a is required, isolating valves 460 are first closed such that fluid no longer passes from the fluid inlet 420 to the first fluid outlet 422. It should be noted that the remaining filtration units, including unit 414b are adapted to accommodate an increased flux when the filtration unit 414a is isolated in this manner, in order to maintain a uniform output. Following this, valve 470 is opened in order to tap a portion of the fluid flowing along conduit 464, which fluid is flowed along path 466 to filtration unit 414a. This fluid is then driven by the system pressure achieved by the drive pump 12 through the bank of membranes 424 in unit 414a in a reverse direction in order to effect backwashing. The backwashing fluid is dumped from filtration unit 414a through the second fluid outlet 438. Once sufficient backwashing has been achieved, valve 470 may be closed and valves 460 may be opened to bring the filtration unit 414a back into operation.

The backwashing system of the present invention is particularly advantageous in that it does not require the entire system to be shutdown. Additionally, because the backwashing system is operated by drive pump 412, no additional pump means is required. Furthermore, because fluid is taken directly from fluid conduit 464, there is no requirement for storage tanks or the like to store fluid to be used in a backwashing process.

Reference is now made to Figure 7 in which there is shown a diagrammatic representation of an injection water treatment apparatus 510 incorporating a chemical cleaning system in accordance with an embodiment of the present invention. The apparatus of Figure 7 is similar to that shown in Figure 1 and as such like components share like reference numerals, incremented by 500.

The apparatus 510 comprises a drive pump 512, a filtration unit 514 and a sulfate removal plant 516. A fluid tap 580 is provided between the filtration unit 514 and the sulfate removal plant 516 in order to tap a portion of filtered fluid from the filtration unit 514. This tapped fluid is then collected in a suitable tank 582 and any required chemicals 584 are added to create a chemical solution 581. When chemical cleaning is required, the filtration unit 514 is isolated from the fluid source (not shown) with valve 586 and the chemical solution 581 is driven via pump 588 to the fluid inlet 520 of the filtration unit.

It will be understood by a person of skill in the art that the embodiments hereinbefore described are merely exemplary of the present invention and that various modifications may be made thereto without departing from the scope of the invention. For example, each of the embodiments shown in Figures 1, 2 and 4 to 7 may further comprise a deaerator in order to remove oxygen and other gases from the fluid being treated. Additionally, in each of the embodiments shown, the sulfate removal plant my comprise separate pump means. Furthermore, in the apparatus 410 of Figure 6, fluid is tapped to be used for backwashing at a location upstream of the sulfate removal plant 416. However, fluid may be tapped from a location downstream of the sulfate removal plant 416. Similarly, fluid tap 580 in the embodiment shown in Figure 7 may be located downstream of the sulfate removal plant 516. Additionally, in the embodiments shown in Figures 4, 6 and 7, fluid may alternatively be driven by a negative pressure differential across the filtration unit.

## Claims

1. An apparatus for treating a fluid to be injected into a subterranean hydrocarbon-bearing formation, said apparatus comprising:
a filtration unit having a fluid inlet and a first fluid outlet, said fluid inlet and first fluid outlet being in fluid communication via a fluid passage;
at least one filtration membrane located within said fluid passage such that the fluid inlet and first fluid outlet are in fluid communication through the at least one filtration membrane, wherein said at least one membrane includes at least one of an ultra-filtration membrane and a micro-filtration membrane; and
an ionic species removal plant coupled to the first fluid outlet and being in fluid communication therewith, wherein the ionic species removal plant is pressure driven such that fluid to be treated is driven under pressure therethrough, and the ionic species removal plant is operated at a pressure less than the osmotic pressure for the feed conditions and membrane type within the ionic species removal plant.

2. An apparatus as claimed in claim 1, wherein the ionic species removal plant is a sulfate removal plant.

3. An apparatus as claimed in claim 1 or 2, wherein the ionic species removal plant comprises at least one nano-filtration membrane.

4. An apparatus as claimed in claim 3, wherein the nano-filtration membrane is adapted to reject divalent sulfate anions (SO₄²⁻).

5. An apparatus as claimed in any preceding claim, wherein the fluid inlet of the filtration unit is adapted to be coupled to a fluid source via a pre-filtration unit.

6. An apparatus as claimed in any preceding claim, wherein the at least one filtration membrane defines a plurality of pores each having a nominal diameter or equivalent dimension of between 0.005 to 0.1 microns for ultra-filtration membranes and 0.05 to 2 microns for micro-filtration membranes.

7. An apparatus as claimed in any preceding claim, wherein the molecular weight cut-off of an ultra-filtration membrane for use in the filtration unit is between 1,000 and 500,000.

8. An apparatus as claimed in any preceding claim, wherein the apparatus comprises a plurality of membranes arranged within the filtration unit.

9. An apparatus as claimed in any preceding claim, wherein the at least one membrane is of a hollow fibre configuration.

10. An apparatus as claimed in any preceding claim, wherein the filtration unit comprises a second fluid outlet to provide an exit for unfiltered fluid or fluid used in a backwashing cleaning operation.

11. An apparatus as claimed in any preceding claim, wherein the filtration unit of the present invention operates in a cross-flow service mode.

12. An apparatus as claimed in any preceding claim, wherein a plurality of filtration units are provided.

13. An apparatus as claimed in claim 12, wherein each filtration unit is adapted to be individually isolated.

14. An apparatus as claimed in any preceding claim, wherein means are provided for creating a pressure differential between the fluid inlet and the first fluid outlet of the filtration unit such that fluid to be treated is pressure driven through the at least one filtration membrane.

15. An apparatus as claimed in claim 14, wherein the pressure differential is provided by pump means.

16. An apparatus as claimed in claim 14 or 15, wherein the fluid is driven by a positive pressure differential.

17. An apparatus as claimed in claim 14 or 15, wherein the fluid is driven by a negative pressure differential by drawing a vacuum across the filtration unit.

18. An apparatus as claimed in any preceding claim, further comprising a cleaning system for use in cleaning at least the at least one membrane of the filtration unit.

19. An apparatus as claimed in claim 18, wherein the cleaning system is adapted to operate while the at least one membrane remains located within the filtration unit.

20. An apparatus as claimed in claim 18 or 19, wherein the cleaning system utilises a portion of fluid from the first fluid outlet of the filtration unit.

21. An apparatus as claimed in claim 18, 19 or 20, wherein the cleaning system is adapted for use where a plurality of filtration units are provided.

22. An apparatus as claimed in claim 21, wherein a filtration unit requiring to be cleaned is isolated from the remaining units such that fluid to be filtered cannot pass therethrough, and the cleaning system permits the isolated filtration unit to be backwashed by forcing fluid taken from the fluid outlet of the operational filtration units in a reverse direction through the at least one membrane located therein.

23. An apparatus as claimed in claim 22, wherein fluid taken from the fluid outlet of the operational filtration units is fed directly to the isolated filtration unit to be cleaned.

24. An apparatus as claimed in claims 20, 21 or 22, wherein fluid for use in the cleaning system is taken from an outlet of the ionic species removal plant.

25. An apparatus as claimed in any one of claims 20 to 24, wherein the fluid utilised in the cleaning system is used in a cleaning process to clean the ionic species removal plant.

26. An apparatus as claimed in any one of claims 18 to 25, wherein the cleaning system further comprises a chemical cleaning system.

27. An apparatus as claimed in claim 26, wherein the chemical cleaning system, in use, requires a chemical solution to be driven across the filtration unit and/or the ionic species removal plant in a normal flow direction.

28. An apparatus as claimed in any one of claims 18 to 27, wherein the cleaning system further comprises air cleaning means wherein compressed air is driven through one or both the filtration unit and ionic species removal plant.

29. An apparatus as claimed in any preceding claim, further comprising a deaerator.

30. A method of treating fluid to be injected into a subterranean hydrocarbon-bearing formation, said method comprising the steps of:
flowing injection fluid through a filtration unit comprising at least one filtration membrane being at least one of an ultra-filtration membrane and a micro-filtration membrane; and then
driving said injection fluid through an ionic species removal plant at a pressure less than the osmotic pressure for the feed conditions and membrane type within the ionic species removal plant.

31. A method as claimed in claim 30, wherein the ionic species removal plant is a sulfate removal plant for removing divalent sulfate ions from the injection fluid.

32. A method as claimed in claim 30 or 31, wherein the ionic species removal plant comprises at least one nano-filtration membrane.

33. A method as claimed in claim 30, 31 or 32, further comprising the step of flowing the injection fluid through a pre-filtration unit prior to flowing the fluid through the filtration unit.

34. A method as claimed in any one of claims 30 to 33, further comprising the step of flowing the fluid through a deaerator.

35. An injection system for injecting fluid into a subterranean hydrocarbon-bearing formation, said system comprising:
a filtration unit comprising at least one filtration membrane being at least one of an ultra-filtration membrane and a micro-filtration membrane;
an ionic species removal plant coupled to an outlet of the filtration unit, wherein the ionic species removal plant is pressure driven such that fluid to be treated is driven under pressure therethrough, and the ionic species removal plant is operated at a pressure less than the osmotic pressure for the feed conditions and membrane type within the ionic species removal plant; and
injection pump means coupled to the ionic species removal plant and adapted for pressurising fluid from the ionic species removal plant to be injected into a hydrocarbon-bearing formation.

36. An injection system as claimed in claim 35, wherein the ionic species removal plant is a sulfate removal plant.

## Patentansprüche

1. Vorrichtung zur Behandlung eines Fluids, das in eine unterirdische kohlenwasserstofführende Formation eingespritzt werden soll, wobei die Vorrichtung aufweist:
eine Filtrationseinheit mit einem Fluideintritt und einem ersten Fluidaustritt, wobei der Fluideintritt und der erste Fluidaustritt mittels eines Fluiddurchganges in Fluidverbindung sind;
mindestens eine Filtrationsmembran, die innerhalb des Fluiddurchganges angeordnet ist, so dass der Fluideintritt und der erste Fluidaustritt durch die mindestens eine Filtrationsmembran in Fluidverbindung sind, wobei die mindestens eine Membran mindestens eine von einer Ultrafiltrationsmembran und einer Mikrofiltrationsmembran einschließt; und
eine Beseitigungsanlage für Ionenarten, die mit dem ersten Fluidaustritt verbunden und in Fluidverbindung damit ist, wobei die Beseitigungsanlage für Ionenarten mittels Druck angetrieben wird, so dass das zu behandelnde Fluid unter Druck dort hindurch getrieben wird, und wobei die Beseitigungsanlage für Ionenarten mit einem Druck betätigt wird, der kleiner ist als der osmotische Druck für die Zuführungsbedingungen und den Membrantyp innerhalb der Beseitigungsanlage für Ionenarten.

2. Vorrichtung nach Anspruch 1, bei der die Beseitigungsanlage für Ionenarten eine Sulfalbeseitigungsanlage ist.

3. Vorrichtung nach Anspruch 1 oder 2, bei der die Beseitigungsanlage für Ionenarten mindestens eine Nanofiltrationsmembran aufweist.

4. Vorrichtung nach Anspruch 3, bei der die Nanofiltrationsmembran ausgeführt ist, um zweiwertige Sulfatanionen (SO₄²⁻) auszufiltern.

5. Vorrichtung nach einem der vorhergehenden Ansprüche, bei der der Fluideintritt der Filtrationseinheit so ausgeführt ist, dass er mit einer Fluidquelle mittels einer Vorfiltrationseinheit verbunden ist.

6. Vorrichtung nach einem der vorhergehenden Ansprüche, bei der die mindestens eine Filtrationsmembran eine Vielzahl von Poren definiert, von denen eine jede einen Nenndurchmesser oder eine äquivalente Abmessung von 0,005 bis 0,1 Mikrometer für Ultrafiltrationsmembranen und von 0,05 bis 2 Mikrometer für Mikrofiltrationsmembranen aufweist.

7. Vorrichtung nach einem der vorhergehenden Ansprüche, bei der die Molekulargewichtsbegrenzung einer Ultrafiltrationsmembran für eine Verwendung in der Filtrationseinheit zwischen 1000 und 500000 liegt.

8. Vorrichtung nach einem der vorhergehenden Ansprüche, bei der die Vorrichtung eine Vielzahl von Membranen aufweist, die innerhalb der Filtrationseinheit angeordnet sind.

9. Vorrichtung nach einem der vorhergehenden Ansprüche, bei der die mindestens eine Membran eine Hohlfaserkonfiguration zeigt.

10. Vorrichtung nach einem der vorhergehenden Ansprüche, bei der die Filtrationseinheit einen zweiten Fluidaustritt aufweist, um einen Austritt für nichtfiltriertes Fluid oder Fluid zu liefern, das bei einem Rückspülreinigungsvorgang verwendet wird.

11. Vorrichtung nach einem der vorhergehenden Ansprüche, bei der die Filtrationseinheit der vorliegenden Erfindung in einer Querstrombetriebsart funktioniert.

12. Vorrichtung nach einem der vorhergehenden Ansprüche, bei der eine Vielzahl von Filtrationseinheiten bereitgestellt wird.

13. Vorrichtung nach Anspruch 12, bei der eine jede Filtrationseinheit so ausgeführt ist, dass sie einzeln getrennt ist.

14. Vorrichtung nach einem der vorhergehenden Ansprüche, bei der ein Mittel für das Erzeugen einer Druckdifferenz zwischen dem Fluideintritt und dem ersten Fluidaustritt der Filtrationseinheit bereitgestellt wird, so dass das zu behandelnde Fluid durch die mindestens eine Filtrationsmembran mittels Druck getrieben wird.

15. Vorrichtung nach Anspruch 14, bei der die Druckdifferenz durch ein Pumpenmittel bereitgestellt wird.

16. Vorrichtung nach Anspruch 14 oder 15, bei der das Fluid mittels einer Überdruckdifferenz angetrieben wird.

17. Vorrichtung nach Anspruch 14 oder 15, bei der das Fluid mittels einer Unterdruckdifferenz durch Saugen eines Vakuums über die Filtrationseinheit angetrieben wird.

18. Vorrichtung nach einem der vorhergehenden Ansprüche, die außerdem ein Reinigunsgssystem für eine Verwendung bei der Reinigung mindestens der mindestens einen Membran der Filtrationseinheit aufweist.

19. Vorrichtung nach Anspruch 18, bei der das Reinigungssystem so ausgeführt ist, dass es funktioniert, während die mindestens eine Membran innerhalb der Filtrationseinheit angeordnet bleibt.

20. Vorrichtung nach Anspruch 18 oder 19, bei der das Reinigungssystem einen Teil des Fluids vom ersten Fluidaustritt der Filtrationseinheit nutzt.

21. Vorrichtung nach Anspruch 18, 19 oder 20, bei der das Reinigungssystem für eine Anwendung angepasst ist, wo eine Vielzahl von Filtrationseinheiten vorhanden ist.

22. Vorrichtung nach Anspruch 21, bei der eine Filtrationseinheit, die gereinigt werden muss, von den restlichen Einheiten getrennt wird, so dass das zu filtrierende Fluid nicht dort hindurch gelangen kann, und das Reinigungssystem gestattet, dass die getrennte Filtrationseinheit **dadurch** rückgespült wird, dass das aus dem Fluidaustritt der betriebsfähigen Filtrationseinheiten entnommene Fluid in einer umgekehrten Richtung durch die mindestens eine darin angeordnete Membran gezwungen wird.

23. Vorrichtung nach Anspruch 22, bei der das aus dem Fluidaustritt der betriebsfähigen Filtrationseinheiten entnommene Fluid direkt zu der zu reinigenden getrennten Filtrationseinheit geführt wird.

24. Vorrichtung nach Anspruch 20, 21 oder 22, bei der das Fluid für eine Verwerdung im Reinigungssystem aus dem Austritt der Beseitigungsanlage für Ionenarten entnommen wird.

25. Vorrichtung nach einem der Ansprüche 20 bis 24, bei der das im Reinigungssystem genutzte Fluid in einem Reinigungsvorgang verwendet wird, um die Beseitigungsanlage für Ionenarten zu reinigen.

26. Vorrichtung nach einem der Ansprüche 18 bis 25, bei der das Reinigungssystem außerdem ein chemisches Reinigungssystem aufweist.

27. Vorrichtung nach Anspruch 26, bei der das chemische Reinigungssystem bei Benutzung erfordert, dass eine chemische Lösung durch die Filtrationseinheit und/oder die Beseitigungsanlage für Ionenarten in einer normalen Strömungsrichtung getrieben wird.

28. Vorrichtung nach einem der Ansprüche 18 bis 27, bei der das Reinigungssystem außerdem eine Luftreinigungseinrichtung aufweist, bei der Druckluft durch eine oder beide von Filtrationseinheit und Beseitigungsanlage für Ionenarten getrieben wird.

29. Vorrichtung nach einem der vorhergehenden Ansprüche, die außerdem eine Entlüftungsvorrichtung aufweist.

30. Verfahren zur Behandlung eines Fluids, das in eine unterirdische kohlenwasserstoffführende Formation eingespritzt werden soll, wobei das Verfahren die folgenden Schritte aufweist:
Strömen des Einspritzfluids durch eine Filtrationseinheit, die mindestens eine Filtrationsmembran aufweist, die mindestens eine von einer Ultrafiltrationsmembran und einer Mikrofiltrationsmembran ist; und danach
Treiben des Einspritzfluids durch eine Beseitigungsanlage für lonenarten mit einem Druck kleiner als der osmotische Druck für die Zuführungsbedingungen und den Membrantyp innerhalb der Beseitigungsanlage für Ionenarten.

31. Verfahren nach Anspruch 30, bei dem die Beseitigungsanlage für Ionenarten eine Sulfatbeseitigungsanlage für das Beseitigen von zweiwertigen Sulfationen aus dem Einspritzfluid ist.

32. Verfahren nach Anspruch 30 oder 31, bei dem die Beseitigungsanlage für Ionenarten mindestens eine Nanofiltrationsmembran aufweist.

33. Verfahren nach Anspruch 30, 31 oder 32, das außerdem den Schritt des Strömens des Einspritzfluids durch eine Vorfiltrationseinheit vor dem Strömen des Fluids durch die Filtrationseinheit aufweist.

34. Verfahren nach einem der Ansprüche 30 bis 33, das außerdem den Schritt des Strömens des Fluids durch eine Entlüftungsvorrichtung aufweist.

35. Einspritzsystem für das Einspritzen von Fluid in eine unterirdische kohlenwasserstoffführende Formation, wobei das System aufweist:
eine Filtrationseinheit, die mindestens eine Filtrationsmembran aufweist, die mindestens eine von einer Ultrafiltrationsmembran und einer Mikrofiltrationsmembran ist;
eine Beseitigungsanlage für Ionenarten, die mit einem Austritt der Filtrationseinheit verbunden ist, wobei die Beseitigungsanlage für Ionenarten mittels Druck angetrieben wird, so dass das zu behandelnde Fluid unter Druck dort hindurch getrieben wird, und wobei die Beseitigungsanlage für Ionenarten mit einem Druck betätigt wird, der kleiner ist als der osmotische Druck für die Zuführungsbedingungen und den Membrantyp innerhalb der Beseitigungsanlage für Ionenarten; und
ein Einspritzpumpenmittel, das mit der Beseitigungsanlage für Ionenarten verbunden und ausgeführt ist, um das von der Beseitigungsanlage für Ionenarten in eine kohlenwasserstoffführende Formation einzuspritzende Fluid unter Druck zu setzen.

36. Einspritzsystem nach Anspruch 35, bei dem die Beseitigungsanlage für Ionenarten eine Sulfatbeseitigungsanlage ist.

## Revendications

1. Appareil pour traiter un fluide devant être injecté dans une formation souterraine contenant des hydrocarbures, ledit appareil comprenant:
une unité de filtration comportant une entrée du fluide et une première sortie du fluide, une communication de fluide étant établie entre ladite entrée du fluide et ladite première sortie du fluide par l'intermédiaire d'un passage de fluide ;
au moins une membrane de filtration agencée dans ledit passage de fluide, une communication de fluide étant ainsi établie entre l'entrée du fluide et la première sortie du fluide à travers la au moins une membrane de filtration, ladite au moins une membrane englobant au moins une membrane d'ultrafiltration ou une membrane de microfiltration; et
une installation d'élimination des espèces ioniques accouplée à la première sortie du fluide et en communication de fluide avec celle-ci, l'installation d'élimination des espèces ioniques étant entraînée par la pression, de sorte que le fluide devant être traité est entraîné sous pression à travers celle-ci, l'installation d'élimination des espèces ioniques étant actionnée à une pression inférieure à la pression osmotique appropriée aux conditions d'alimentation et au type de membrane dans l'installation d'élimination des espèces ioniques.

2. Appareil selon la revendication 1, dans lequel l'installation d'élimination des espèces ioniques est une installation d'élimination des sulfates.

3. Appareil selon les revendications 1 ou 2, dans lequel l'installation d'élimination des espèces ioniques comprend au moins une membrane de nanofiltration.

4. Appareil selon la revendication 3, dans lequel la membrane de nanofiltration est adaptée pour rejeter des anions de sulfate bivalents (SO₄²⁻).

5. Appareil selon l'une quelconque des revendications précédentes, dans lequel l'entrée du fluide de l'unité de filtration est adaptée pour être accouplée à une source de fluide par l'intermédiaire d'une unité de préfiltration.

6. Appareil selon l'une quelconque des revendications précédentes, dans lequel la au moins une membrane de filtration définit plusieurs pores, ayant chacun un diamètre nominal ou une dimension équivalente compris entre 0,05 et 0,1 microns pour les membranes d'ultrafiltration et entre 0,05 et 2 microns pour les membranes de microfiltration.

7. Appareil selon l'une quelconque des revendications précédentes, dans lequel le seuil de rétention des molécules d'une membrane d'ultrafiltration destinée à être utilisée dans l'unité de filtration est compris entre 1.000 et 500.000.

8. Appareil selon l'une quelconque des revendications précédentes, dans lequel l'appareil comprend plusieurs membranes agencées dans l'unité de filtration.

9. Appareil selon l'une quelconque des revendications précédentes, dans lequel la au moins une membrane a une configuration d'une fibre creuse.

10. Appareil selon l'une quelconque des revendications précédentes, dans lequel l'unité de filtration comprend une deuxième sortie du fluide pour établir une sortie du fluide non filtré ou du fluide utilisé lors d'une opération de nettoyage par lavage à contre-courant.

11. Appareil selon l'une quelconque des revendications précédentes, dans lequel l'unité de filtration selon la présente invention fonctionne dans un mode de service à écoulement transversal.

12. Appareil selon l'une quelconque des revendications précédentes, comprenant plusieurs unités de filtration.

13. Appareil selon la revendication 12, dans lequel chaque unité de filtration est adaptée pour être isolée individuellement.

14. Appareil selon l'une quelconque des revendications précédentes, comprenant un moyen pour établir une différence de pression entre l'entrée du fluide et la première sortie du fluide de l'unité de filtration, de sorte que le fluide devant être traité est entraîné sous pression à travers la au moins une membrane de filtration.

15. Appareil selon la revendication 14, dans lequel la différence de pression est établie par un moyen de pompe.

16. Appareil selon les revendications 14 ou 15, dans lequel le fluide est entraîné par une différence de pression positive.

17. Appareil selon mes revendications 14 ou 15, dans lequel le fluide est entraîné par une différence de pression négative en établissant un vide à travers l'unité de filtration.

18. Appareil selon l'une quelconque des revendications précédentes, comprenant en outre un système de nettoyage destiné au nettoyage d'au moins la au moins une membrane de l'unité de filtration.

19. Appareil selon la revendication 18, dans lequel le système de nettoyage est adapté pour fonctionner pendant que la au moins une membrane reste agencée dans l'unité de filtration.

20. Appareil selon les revendications 18 ou 19, dans lequel le système de nettoyage utilise une partie du fluide prélevé de la première sortie du fluide de l'unité de filtration.

21. Appareil selon les revendications 18, 19 ou 20, dans lequel le système de nettoyage est adapté pour être utilisé en présence de plusieurs unités de filtration.

22. Appareil selon la revendication 21, dans lequel une unité de filtration devant être nettoyée est isolée des unités restantes, de sorte que le fluide devant être filtré ne peut pas la traverser, le système de nettoyage permettant le lavage à contre-courant de l'unité de filtration isolée en entraînant le fluide prélevé de la sortie du fluide des unités de filtration opérationnelles dans une direction inverse à travers la au moins une membrane qui y est agencée.

23. Appareil selon la revendication 22, dans lequel le fluide prélevé de la sortie du fluide des unités de filtration opérationnelles est amené directement vers l'unité de filtration isolée devant être nettoyée.

24. Appareil selon les revendications 20, 21 ou 22, dans lequel le fluide utilisé dans le système de nettoyage est prélevé d'une sortie de l'installation d'élimination des espèces ioniques.

25. Appareil selon l'une quelconque des revendications 20 à 24, dans lequel le fluide utilisé dans le système de nettoyage est utilisé dans un processus de nettoyage pour nettoyer l'installation d'élimination des espèces ioniques.

26. Appareil selon l'une quelconque des revendications 18 à 25, dans lequel le système de nettoyage comprend en outre un système de nettoyage chimique.

27. Appareil selon la revendication 26, dans lequel le système de nettoyage chimique exige en service l'entraînement d'une solution chimique à travers l'unité de filtration et/ou l'installation d'élimination des espèces ioniques, dans une direction d'écoulement normale.

28. Appareil selon l'une quelconque des revendications 18 à 27, dans lequel le système de nettoyage comprend en outre un moyen de purification de l'air, dans lequel l'air comprimé est entraîné à travers une unité de filtration ou les deux unités de filtration et l'installation d'élimination des espèces ioniques.

29. Appareil selon l'une quelconque des revendications précédentes, comprenant en outre un désaérateur.

30. Procédé de traitement d'un fluide devant être injecté dans une formation souterraine contenant des hydrocarbures, ledit procédé comprenant les étapes ci-dessous :
écoulement du fluide d'injection à travers une unité de filtration comprenant au moins une membrane de filtration, constituée par au moins une membrane d'ultrafiltration ou une membrane de microfiltration ; et ensuite
entraînement dudit fluide d'injection à travers l'installation d'élimination des espèces ioniques à une pression ïnférieure à la pression osmotique appropriée aux conditions d'alimentation et au type de membrane dans l'installation d'élimination des espèces ioniques.

31. Procédé selon la revendication 30, dans lequel l'installation d'élimination des espèces ioniques est une installation d'élimination des sulfates pour éliminer les ions de sulfate bivalents du fluide d'injection.

32. Procédé selon les revendications 30 ou 31, dans lequel l'installation d'élimination des espèces ioniques comprend au moins une membrane de nanofiltration.

33. Procédé selon les revendications 30, 31 ou 32, comprenant en outre l'étape d'écoulement du fluide d'injection à travers une unité de préfiltration avant l'écoulement du fluide à travers l'unité de filtration.

34. Procédé selon l'une quelconque des revendications 30 à 33, comprenant en outre l'étape d'écoulement du fluide à travers un désaérateur.

35. Système d'injection pour injecter un fluide dans une formation souterraine contenant des hydrocarbures, ledit système comprenant :
une unité de filtration, comprenant au moins une membrane de filtration, constituée par au moins une membrane d'ultrafiltration ou une membrane de microfiltration ;
une installation d'élimination des espèces ioniques accouplée à une sortie de l'unité de filtration, l'installation d'élimination des espèces ioniques étant entraînée par pression, de sorte que le fluide devant être traité est entraîné sous pression à travers celle-ci, l'installation d'élimination des espèces ioniques étant actionnée à une pression inférieure à la pression osmotique appropriée aux conditions d'alimentation et au type de membrane dans l'installation d'élimination des espèces ioniques ; et
un moyen de pompe d'injection accouplée à l'installation d'élimination des espèces ioniques et adapté pour mettre sous pression le fluide provenant de l'installation d'élimination des espèces ioniques devant être injecté dans une formation contenant des hydrocarbures.

36. Système d'injection selon la revendication 35, dans lequel l'installation d'élimination des espèces ioniques est une installation d'élimination des sulfates,
